# EUROPÄISCHE PATENTSCHRIFT

(11) **EP 1 462 672 B1**
(45) Veröffentlichungstag und Bekanntmachung des Hinweises auf die Patenterteilung: **23.01.2008**
(21) Anmeldenummer: 04006493.3
(22) Anmeldetag: 18.03.2004
(51) Int. Cl.: F16D 65/12

(54) **Innenbelüftete Bremsscheiben mit verbessertem Wärmeübergang**
Internally ventilated brake disc with improved heat transfer
Disque de frein ventilé à transfert de chaleur amélioré

(30) Priorität: 28.03.2003 DE 10314393
(43) Veröffentlichungstag der Anmeldung: 29.09.2004
(73) Patentinhaber: AUDI AG, 85045 Ingolstadt (DE)
(72) Erfinder: Wüllner, Andreas, 80992 München (DE); Kienzle, Andreas, Dr., 86753 Möttingen OT Balgheim (DE)
(74) Vertreter: Deckers, Hellmuth Alexander

(56) Entgegenhaltungen:
- WO-A-03/012310
- BE-A- 515 936
- DE-A- 19 651 798
- DE-C- 10 148 659
- DE-U- 9 407 546
- GB-A- 2 116 654
- US-A- 2 775 322
- US-A- 3 391 763
- US-A- 4 083 435
- US-A- 4 164 993
- PATENT ABSTRACTS OF JAPAN Bd. 1996, Nr. 10, 31. Oktober 1996 (1996-10-31) -& JP 08 164828 A (NISSAN MOTOR), 25. Juni 1996 (1996-06-25)

## Beschreibung

Die Erfindung betrifft innenbelüftete Bremsscheiben mit verbessertem Wärmeübergang.

In Bremssystemen für Automobile und andere Fahrzeuge, beispielsweise Schienenfahrzeuge und Flugzeuge, werden Kombinationen von Bremsscheiben und Bremsklötzen eingesetzt. Beim Abbremsen müssen hohe kinetische Energien innerhalb von kurzer Zeit durch Umwandlung in Wärmeenergie vernichtet werden. Dabei muß auf der einen Seite die Wärmekapazität der Bremsscheibe so ausgelegt sein, daß die beim Abbremsen entwickelte Reibungswärme aufgenommen werden kann. Andererseits muß die Bremsscheibe die Wärme möglichst rasch wieder an die Umgebung abgeben können, da eine niedrigere Arbeitstemperatur sowohl schonender für die Bremsscheibe und für den Bremsklotz ist, und der Reibungskoeffizient für die Gleitreibung in der Paarung Bremsscheibe / Bremsklotz mit höheren Temperaturen abnimmt.

Während eine massive Bremsscheibe eine hohe Wärmekapazität aufweist (die Wärmekapazität eines Körpers ist das Produkt aus der spezifischen Wärmekapazität und der Masse, die im Fall eines massiven Körpers bei gegebener Außengeometrie maximal ist) und damit in der Lage ist, die beim Abbremsen aus hohen Geschwindigkeiten entwickelte Wärme vollständig aufzunehmen, ist sie andererseits wenig geeignet, die aufgenommenen Wärme effizient an die Umgebung abzuführen. Zu dem letzteren Zweck ist es vorteilhaft, Kühlkanäle in die Bremsscheibe einzubringen, wobei diese bevorzugt so gestaltet werden, daß durch die Rotation im Sinne eines Impellers oder bevorzugt Expellers Luft durch die Kanäle gepumpt wird, die zur Kühlung beiträgt. Bevorzugt ist dabei der Luftstrom von innen nach außen, also von der Drehachse hinweg gerichtet.

Die Richtung der Luftströmung hängt in bekannter Weise von den Druckverhältnissen an den Enden der Kanäle ab, die insbesondere sowohl durch die Scheibengeometrie, nämlich die Größe der Öffnung der Kanäle und die bei gegebener Winkelgeschwindigkeit durch die geometriebedingte Bahngeschwindigkeit an der Stelle der Öffnung, und durch die Kompressibilität der strömenden Luft bestimmt werden.

Aus dem Dokument GB 2 116 654 A ist eine Bremsscheibe aus Gußeisen mit Noppen (knobs) in axialer Richtung zwischen den Luftkanalwänden (vanes) bekannt, wobei benachbarte Noppen jeweils unterschiedliche Länge haben.

In der Patentschrift US 2 775 322 A werden innenbelüftete Bremsscheiben mit Lüftungskanälen und "fluid deflectors" beschrieben, also mit Stromstörern in Gestalt von Leitprofilen, die sich durch mehrere der Kanäle erstrecken können oder aus Leitprofilen bestehen können, die sich nur jeweils über einen Teil je zweier aneinandergrenzender Kanäle erstrecken. Die Leitprofile werden bei der Fertigung mitgegossen.

In der Patentschrift US 3 391 763 A werden auf den Innenseiten der aus zwei Teilscheiben mit Abstandsrippen zusammengesetzten Bremsscheiben angeordnete Wärmeübertragungselemente beschrieben, die aus Kupfer oder einem anderen thermisch gut leitenden Material bestehen. Die genannten Wärmeübertragungselemente werden in Bohrungen eingesetzt, die in den Rotorelementen (Halbscheiben) eingebracht werden.

Der an die Kühlluft übertragene Wärmestrom ist der Wärmeleitfähigkeit der Schicht zwischen der Wärmequelle und der Wärmesenke (Reibfläche und Kühlkanalwand) proportional. Bekanntermaßen ist die Wärmeleitfähigkeit von Metallen erheblich größer als die von faserverstärkten keramischen Materialien. Während daher im Fall von metallischen Bremsscheiben die Wärmeabfuhr noch ausreichend groß sein kann, um die Betriebstemperatur der Reibfläche während oder nach einer Belastung rasch abzusenken, ist insbesondere bei nichtmetallischen, beispielweise faserverstärkten keramischen Bremsscheiben nach Möglichkeiten zu suchen, die Wärmeabfuhr zu verbessern. Dies ist insbesondere wichtig bei Fahrzeugen, die hohe Massen haben und/oder mit hohen Geschwindigkeiten bewegt werden.

Es besteht daher die Aufgabe, ein Verfahren zur Herstellung von Bremsscheiben mit verbesserter Wärmeabfuhr bereitzustellen, insbesondere von derartigen Bremsscheiben aus faserverstärkten keramischen Materialien.

Die Erfindung betrifft daher ein Verfahren zur Herstellung von innenbelüfteten Bremsscheiben aus faserverstärkter Keramik mit verbesserter Wärmeabführung, deren Kühlkanäle Stromstörer enthalten, die zu einer Wirbelbildung der in den Kühlkanälen strömenden Luft führen, wobei die Stromstörer ausgewählt sind aus Noppen, Luftleitprofilen und Stromteilern, umfassend die Schritte
- Bereitstellung von Kernen mit Aussparungen entsprechend der Gestalt der Noppen, Luftleitprofile oder Stromteilern in den Kühlkanälen,
- Einlegen eines wärmebeständigen Materials in die Ausnehmungen, das im Verlauf des weiteren Keramisierungsprozesses die Noppen, Luftleitprofile oder Stromteiler bildet,
- Einsetzen der Kerne an die Stelle der zu bildenden Hohlräume in eine Form, Befüllen der Form mit durch Fasern aus Kohlenstoff verstärkten carbonisierbaren Materialien und Bilden eines Vorkörpers für die Bremsscheiben durch Preßformen oder Spritzformen,
- Erhitzen des Vorkörpers unter Ausschluß von oxydierenden Stoffen auf eine Temperatur zwischen 750 °C und 1300 °C unter Carbonisierung und Bildung eines porösen, mit Fasern aus Kohlenstoff verstärkten Kohlenstoff-Kärpers,
- Infiltrieren des carbonisierten Körpers mit einer Schmelze von Silicium oder einer Schmelze einer silicium enthaltenden Mischung und Reaktion des Kohlenstoffs unter Bildung von Siliciumcarbid.

Weiter betrifft die Erfindung ein Verfahren zur Herstellung von innenbelüfteten Bremsscheiben aus keramischen Werkstoffen mit Stromstörern in den Kühlkanälen, wobei die Stromstörer als Körper in diejenigen Kerne eingebracht werden, die beim Fertigungsprozeß die Stelle der zu bildenden Kühlkanäle einnehmen.

Das Verfahren gemäß der Erfindung ist geeignet zur Herstellung innenbelüfteter Bremsscheiben, in denen die inneren (zur Achse gerichteten) Kanalquerschnitte und die äußeren (zur Peripherie der Bremsscheibe hin gerichteten) Kanalquerschnitte so gestaltet sind, daß die zwischen ihnen resultierende Druckdifferenz den durch die Stromstörer hervorgerufenen Druckverlust zumindest teilweise kompensiert.

Das Verfahren ist weiter geeignet zur Herstellung innenbelüfteter Bremsscheiben, in denen die Kanäle und Stromstörer so gestaltet sind, daß sie als statische Mischer wirken.

Das Verfahren ist außerdem geeignet zur Herstellung von innenbelüfteten Bremsscheiben mit Stromstörern in den Kühlkanälen durch Fügen von mindestens zwei Bremsscheibenteilen.

Die Stromstörer können dabei aus demselben Material wie die Bremsscheiben bestehen. Es ist jedoch bevorzugt, daß die Stromstörer eine höhere Wärmeleitfähigkeit als das Material der Bremsscheibe besitzen. Im Fall einer faserverstärkten keramischen Bremsscheibe kann diese aus einem inneren Tragkörper mit aufgesetzten Reibschichten und Stromstörern in den Kühlkanälen bestehen. Die Stromstörer haben dann bevorzugt eine höhere Wärmeleitfähigkeit als das Material der Bremsscheibe.

Die Stromstörer können die Gestalt von Noppen oder luftleitenden Profilen oder Stromteilern haben. Diese luftleitenden Profile können sich nur wenig über die Fläche der Wand erheben, es ist jedoch auch möglich, daß die Profile den gesamten Kanalquerschnitt überspannen. Bevorzugt sind die Stromstörer so ausgebildet, daß an der Stelle und in der Umgebung eines Stromstörers die ansonsten laminare Luftströmung in eine turbulente Strömung übergeht. Die Höhe der Noppen oder der luftleitenden Profile beträgt bevorzugt nicht mehr als 40 % , insbesondere bis zu 35 % der lichten Weite an der betreffenden Stelle des Kühlkanals. In Stromrichtung aufeinanderfolgende Noppen oder Profile sind dabei bevorzugt seitlich versetzt.

Eine andere Ausführungsform sieht vor, daß die Stromstörer im Sinne eines statischen Mischsystems wirken, daß also aufeinanderfolgende Stromstörer die strömende Luft so durchmischen, daß in Richtung der Strömung aufeinanderfolgende Stromstörer jeweils mindestens zwei Teilströme vereinigen und mindestes einen Teilstrom in mindestens zwei Teilströme aufteilen. Dabei werden die Ströme so abgelenkt, daß strömende Luft aus der Mitte des Kühlkanals an die Wände gelenkt wird, und Luft von der Wand in die Mitte des Kühlkanals gelenkt wird. In diesem Fall ist es bevorzugt, daß die luftleitenden Profile den gesamten Innenquerschnitt eines Kühlkanals überspannen.

Die Erfindung betrifft weiter eine Ausführung der Kühlkanäle derart, daß nicht nur die Stromstörer, sondern zumindest eine Teil der Wandung, bevorzugt die gesamte Wandung der Kühlkanäle mit einem Material ausgekleidet ist, das eine höhere Wärmeleitfähigkeit als der Körper der Bremsscheibe aufweist.

Die Herstellung der erfindungsgemäßen Bremsscheiben kann durch Fügen von einzelnen Teilen der Bremsscheibe und bevorzugt untrennbares Verbinden der gefügten Teile erfolgen.

Im Fall von metallischen Scheiben insbesondere aus Stahl oder Grauguß kann dies beispielsweise dadurch erfolgen, daß zwei Halbscheiben auf den einander zugewandten Seiten mit Vor- und Rücksprüngen versehen werden, die sich beim Fügen verhaken. Dabei sind die Halbscheiben so geformt, daß beim Aneinanderfügen der beiden Halbscheiben die gewünschten Kanäle gebildet werden. Die Stromstörer werden dabei als Noppen, Profile oder Halbprofile auf der Innenseite der Halbscheiben ausgebildet, oder es wird ein inneres Teil zwischen zwei Halbschalen eingelegt, das die erforderlichen Profile oder Luftleitbleche enthält.

Im Fall von keramischen Bremsscheiben, die durch Fügen und Verbinden von mehreren Teilen hergestellt werden, kann die von den metallischen Bremsscheiben bekannte Füge- und Verbindungstechnik angewandt werden. Besonders bevorzugt ist es jedoch, die keramischen Bremsscheiben in einem einteiligen Formgebungsverfahren durch eine Pressen mit Kernen herzustellen, wobei Kerne an der Stelle der zu bildenden Hohlräume in die Preßmasse eingelegt werden. Die Noppen und Profile können durch entsprechende Aussparungen der Kerne gebildet werden, wobei ein Teil der Preßmasse in diese Aussparungen fließt und später die Noppen oder Profile bildet. Es hat sich als besonders günstig erwiesen, vor dem Pressen Ausnehmungen in den Kernen zu bilden, in die ein wärmebeständiges Material eingelegt wird, das im Verlauf des Keramisierungsprozesses die Noppen oder Profile bildet. Werden kompressible Kerne verwendet, so können auch Schüttungen oder beispielsweise durch Klebstoff oder thermoplastische Kunststoffe gebundene Schüttungen von wärmebeständigen Materialien eingesetzt werden, die bei Preßvorgang soweit verdichtet werden, daß sie nach dem Entfernen der Kerne ihre Gestalt annähernd behalten. In einer bevorzugten Ausführungsform werden die Kerne durch Kreisringe an der inneren und/oder äußeren Peripherie verbunden.

Anstelle des Einlegens von Material in Aussparungen der Kerne kann die Füllung der Aussparungen in den Kernen auch so erfolgen, daß die durch mindestens einen Kreisring verbundenen Kerne in einen Schlicker getaucht werden, wobei der Schlicker eine bevorzugt wäßrige Aufschlämmung von kohlenstoffhaltigen Materialien oder Siliciumcarbid-Pulver ist und einen Binder, beispielsweise Polyvinylalkohol oder Phenolharze enthält. Die Viskosität und der Feststoffgehalt des Schlickers werden so gewählt, daß sich nach dem Trocknen der Kerne auf ihre Oberfläche eine zusammenhängende Schicht aus den im Schlicker aufgeschlämmten Feststoffen und dem Binder bindet, wobei die Aussparungen ebenfalls gefüllt werden. Im Verlauf der weiteren Verarbeitung durch Carbonisieren bildet sich aus dieser Schicht eine Innenbeschichtung der Wandung in den Kühlkanälen, die bei geeignete Wahl der Materialien zu der gewünschten höheren Wärmeleitfähigkeit führt.

Der Druckverlust in den Kanälen durch die als Stromstörer wirkenden Einbauten kann bevorzugt dadurch kompensiert werden, daß die Öffnungen der Kanäle zur inneren und äußeren Peripherie der kreisringförmigen Bremsscheibe so gestaltet werden, daß ein ausreichendes Druckgefälle zwischen den Enden des Kühlkanals besteht. Dabei ist die Form und Größe der Öffnungen des Kanals entsprechend der Bahngeschwindigkeit bei der Rotation der Bremsscheibe und dem durch die Geometrie des Kanalquerschnitts und die Einbauten bestimmten Wirkradius des Kühlkanals auszulegen.

Die Einzelheiten der Erfindung werden nachstehend an Hand der Zeichnungen näher beschrieben. Dabei zeigen
- Fig. 1: eine perspektivische Darstellung einer in der Mittelebene aufgeschnittenen Bremsscheibe mit Noppen, Luftleitprofilen und einem zweiteiligen statischen Mischer
- Fig. 2: einen Schnitt längs der Linie II - II in Fig. 1 durch einen Kühlkanal mit Noppen
- Fig. 3: einen Schnitt längs der Linie III - III in Fig. 1 durch einen Kühlkanal mit Luftleitprofilen
- Fig. 4: einen Schnitt längs der Linie IV - IV in Fig. 1 durch einen Kühlkanal mit einem zur Bremsscheibenebene senkrecht, also vertikal angeordneten statischen Mischelement
- Fig. 5: einen Schnitt längs der Linie V - V in Fig. 1 durch einen Kühlkanal mit einem zur Bremsscheibenebene parallel, also horizontal angeordneten statischen Mischelement.

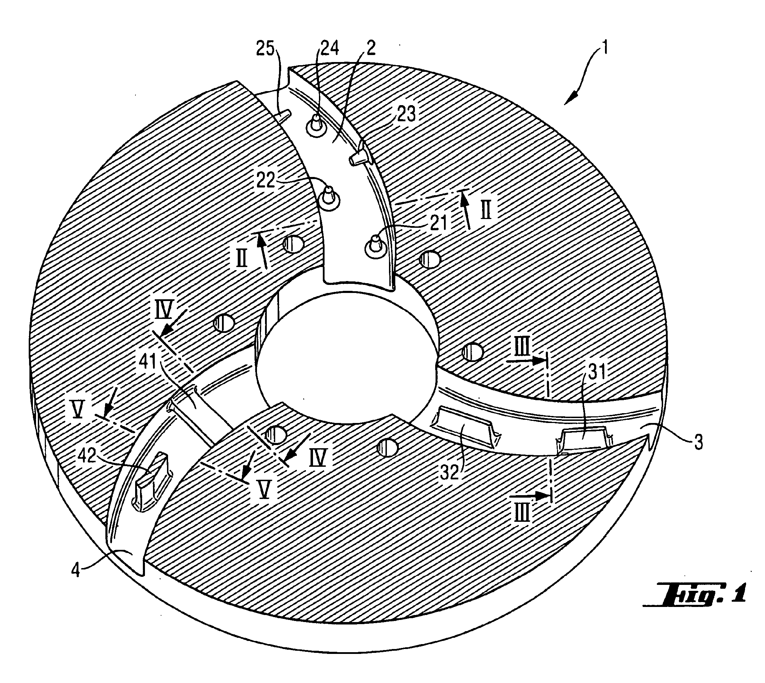

Im einzelnen zeigt die Fig. 1 eine perspektivische Darstellung einer in der Mittelebene parallel zur Reibfläche aufgeschnittenen Bremsscheibe **1**. Der Übersichtlichkeit halber sind lediglich drei Kühlkanäle **2, 3** und **4** dargestellt. Der Kühlkanal **2** ist in seinem Inneren mit noppenförmigen Erhebungen **21, 22, 23, 24** und **25** versehen. Der Kühlkanal **3** ist in seinem Inneren mit Luftleitprofilen **31, 32** und der Kühlkanal 4 mit Stromteilern **41, 42** ausgestattet.

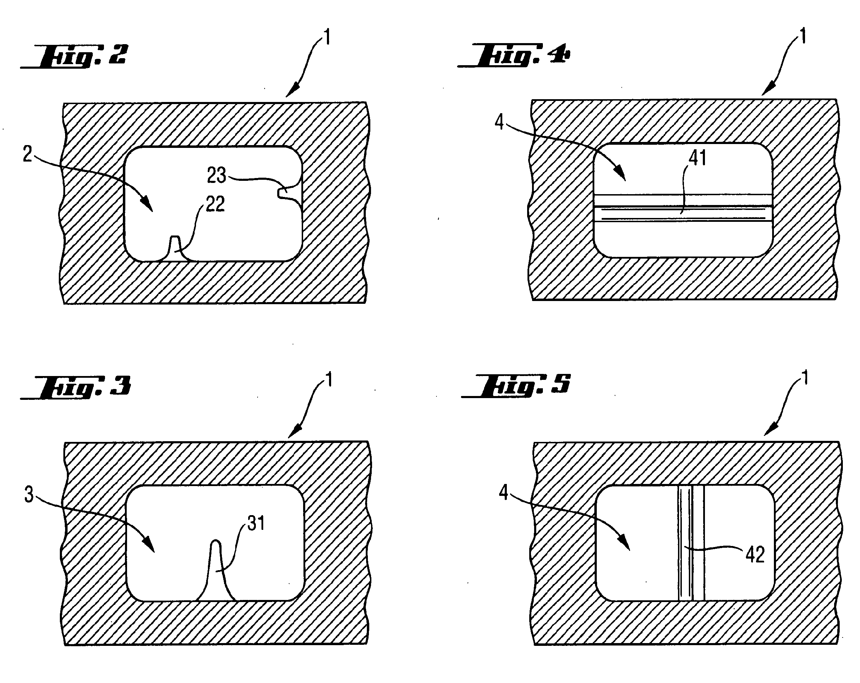

Die Fig. 2 zeigt einen Schnitt durch den Kühlkanal **2** der Bremsscheibe **1** längs der Linie II - II. An der Innenwandung sind noppenförmige Erhebungen **22** und **23** dargestellt.

Die Fig. 3 zeigt einen Schnitt durch den Kühlkanal **3** der Bremsscheibe **1** längs der Linie III - III. Auf dem Boden des Kühlkanals ist ein Luftleitprofil **31** angebracht.

Die Fig. 4 zeigt einen Schnitt durch den Kühlkanal **4** der Bremsscheibe **1** längs der Linie IV - IV. In der Mitte der Höhe des Kühlkanals ist ein Stromteiler **41** angebracht, der den Luftstrom in einen oberen und einen unteren Teil aufteilt.

Die Fig. 5 zeigt einen Schnitt durch den Kühlkanal **5** der Bremsscheibe **1** längs der Linie V - V. Vom Boden bis zur Decke des Kühlkanals reicht ein Stromteiler **42**, der den Luftstrom horizontal aufteilt.

Die Stromteiler sind bevorzugt wie in Fig. 4, Stromteiler **42**, so ausgeführt, daß sie den Luftstrom nicht nur aufteilen, sondern auch noch in Richtung auf eine Wand des Kühlkanals hin ablenken. Dadurch erhält die ansonsten laminare Strömung eine Turbulenz, die zu besserer Durchmischung des Luftstroms in sich führt.

Es ist erfindungsgemäß bevorzugt, die Stromstörer bzw. Stromteiler aus einem Werkstoff auszuführen, der eine bessere Wärmeleitfähigkeit als das Material der Bremsscheibe hat. Dadurch kann der Wärmeübergang von den Stromstörern auf die vorbeiströmende Luft verbessert werden.

Im Fall einer keramischen Bremsscheibe besteht diese bevorzugt aus faserverstärkter Keramik, wobei insbesondere Verstärkungsfasern aus Kohlenstoff eingesetzt werden. Die Matrix enthält bevorzugt Siliciumcarbid sowie Silicium und gegebenenfalls Kohlenstoff. Bevorzugt werden innenbelüftete keramische Bremsscheiben mit einer Siliciumcarbid-haltigen Matrix hergestellt, indem ein Vorkörper aus mit Kohlenstoffasern verstärkten carbonisierbaren Materialien durch Preßformen oder Spritzformen hergestellt wird, wobei an die Stellen der zu bildenden Hohlräume und Ausnehmungen Kerne in die Form eingesetzt werden, die gegebenenfalls miteinander verbunden sind. Bevorzugt werden als carbonisierbare Materialien Pech, Kunstharze und thermoplastische Harze mit Kohlenstoffausbeuten beim Carbonisieren von bevorzugt mindestens 50 % der eingesetzten Masse. Besonders bevorzugt sind Peche und Phenolharze.

Zur Bildung der noppenförmigen Erhebungen oder Luftleitprofile werden in die Kerne entsprechend gestalte Ausnehmungen eingeformt, die entweder leer bleiben und dann beim Beschickungs- oder Preßvorgang mit der mit Kohlenstoffasern verstärkten carbonisierbaren Masse gefüllt werden, oder sie werden vor dem Einbringen der carbonisierbaren Masse mit einem Material wie beispielsweise SiSiC (mit Silicium infiltriertes Siliciumcarbid), Siliciumcarbid-Pulver, Ruß, Graphit, oder hoch wärmeleitfähigen Pech-basierenden Kohlenstoffasern gefüllt, direkt oder über Beschichten, insbesondere Tauchen mit einem Schlicker, wobei dies Material bereits in der Form der später gebildeten noppenförmigen Erhebung bzw. des Stromstörers vorliegt und beim Infiltrationsschritt fest mit der Matrix verbunden wird. Zur Bildung von statischen Mischelementen werden bevorzugt vorgeformte statische Mischelemente aus carbonisiertem harzimprägniertem Kohlenstoffasergewebe in die Spritzgußform für die Kerne eingelegt. Diese werden ebenfalls bei dem Infiltrationsschritt fest mit der Matrix verbunden.

Der Preßling wird nun nach dem Formen und gegebenenfalls Härten auf eine Temperatur zwischen ca. 750 bis ca. 1300 °C unter Ausschluß von oxydierenden Stoffen erhitzt. Bei diesem Carbonisierungsschritt bildet sich ein poröser mit Kohlenstoffasern verstärkter Kohlenstoffkörper. Dieser Körper kann gegebenenfalls mit einer carbonisierbaren flüssigen Substanz imprägniert und erneut carbonisiert werden, wobei die Porosität verringert wird. Der carbonisierte Körper kann gegebenenfalls durch Erhitzen auf eine Temperatur von 1800 bis 3000 °C graphitiert werden. Der carbonisierte oder gegebenenfalls graphitierte Körper wird dann durch Infiltration mit einer Schmelze von Silicium oder einer Silicium enthaltenden Mischung und Reaktion des Kohlenstoffs in der Matrix mit dem Infiltrationsmittel zu einer mit Fasern aus Kohlenstoff verstärkten Keramik umgesetzt, deren Matrix Siliciumcarbid, nicht umgesetztes Silicium, gegebenenfalls nicht umgesetzten Kohlenstoff sowie gegebenenfalls Carbide der neben Silicium in der Mischung vorliegenden Elemente sowie nicht umgesetzte Reste dieser Elemente enthält.

Im Vergleich zu innenbelüfteten Bremsscheiben mit einem Außendurchmesser von 380 mm mit glatten Kanälen ergab sich bei ansonsten gleicher Geometrie und einer Ausführung mit 12 Kanälen gemäß Fig. 2, wobei in jedem Kanal 12 Noppen mit einer Höhe von jeweils 4 mm aus demselben Material wie die Bremsscheibe eingeformt waren, daß die erfindungsgemäß modifizierte Bremsscheibe nach einem Bremsversuch, bei dem die Oberfläche der Scheibe auf 1000 °C aufgeheizt war, bereits nach 2 Minuten die Oberflächentemperatur auf 120 °C abgesunken war, während eine entsprechende Scheibe mit glatten Kanälen diese Temperatur erst nach 5 Minuten wieder erreicht hatte. Bei einer Ausführung der Bremsscheibe gemäß Fig. 3 mit 12 Kanälen und jeweils 2 ca. 10 mm langen und ca. 5 mm hohen Luftleitprofilen je Kanal war bereits nach 1,5 Minuten wieder eine Oberflächentemperatur von 120 °C erreicht. Die Ausführung mit statischen Mischern gemäß den Zeichnungen 4 und 5, wobei je Kanal zwei Paare von hintereinander angeordneten horizontalen und vertikalen Stromteilern entsprechend **41** und **42** in Fig. 4 angeordnet waren, ergab eine Zeit von weniger als einer Minute für das Erreichen der Oberflächentemperatur von 120 °C.

### Bezugszeichenliste

- 1: Bremsscheibe
- 2: Kühlkanal mit noppenförmigen Stromstörern
- 3: Kühlkanal mit Kufdeitprofilen
- 4: Kühlkanal mit Einbauten, die als statische Mischer wirken
- 21, 22, 23, 24, 25: noppenförmige Stromstörer
- 31,32: Luftleitprofile
- 41, 42: Einbauten, die als statische Mischer wirken

## Patentansprüche

1. Verfahren zur Herstellung von innenbelüfteten Bremsscheiben (1) aus faserverstärkter Keramik mit Kühlkanälen (2, 3, 4), deren Kühlkanäle Stromstörer enthalten ausgewählt aus Noppen (21, 22, 23, 24, 25), Luftleitprofilen (31, 32, 41, 42) und Stromteilern (41, 42), umfassend die Schritte
- Bereitstellung von Kernen mit Aussparungen entsprechend der Gestalt der Noppen (21, 22, 23, 24, 25), Luftleitprofile (31, 32, 41, 42) oder Stromteilern (41, 42) in den Kühlkanälen,
- Einlegen eines wärmebeständigen Materials in die Ausnehmungen, das im Verlauf des weiteren Keramisierungsprozesses die Noppen (21, 22, 23, 24, 25), Luftleitprofile (31, 32, 41, 42) oder Stromteiler (41, 42) bildet,
- Einsetzen der Kerne an die Stelle der zu bildenden Hohlräume in eine Form, Befüllen der Form mit durch Fasern aus Kohlenstoff verstärkten carbonisierbaren Materialien und Bilden eines Vorkörpers für die Bremsscheiben durch Preßformen oder
- Spritzformen,
- Erhitzen des Vorkörpers unter Ausschluß von oxydierenden Stoffen auf eine Temperatur zwischen 750 °C und 1300 °C unter Carbonisierung und Bildung eines porösen, mit Fasern aus Kohlenstoff verstärkten Kohlenstoff-Körpers,
- Infiltrieren des carbonisierten Körpers mit einer Schmelze von Silicium oder einer Schmelze einer Silicium enthaltenden Mischung und Reaktion des Kohlenstoff unter Bildung von Siliciunicarbid.

2. Verfahren nach Anspruch 1, **dadurch gekennzeichnet, daß** das wärmebeständige Material ausgewählt ist aus mit Silicium infiltriertem Siliciumcarbid, Siliciumcarbid-Pulver, Ruß, Graphit, und hoch wärmeleitfähigen Pech-basierenden Fasern aus Kohlenstoff.

3. Verfahren nach Anspruch 1, **dadurch gekennzeichnet, daß** bei der Bildung von Vorkörpern durch Preßformen kompessible Kerne verwendet werden, und daß wärmebeständige Materialien in Form von Schüttungen eingesetzt werden, die beim Preßvorgang soweit verdichtet werden, daß sie nach dem Entfernen der Kerne ihre Gestalt annähernd behalten.

4. Verfahren nach Anspruch 1, **dadurch gekennzeichnet, daß** die Kerne mit einem Material enthaltend einen Binder und Kohlenstoff in Form von Ruß oder Graphit oder hochwärmeleitfähige Kohlenstoffasern auf Pechbasis oder Siliciumcarbid-Pulver beschichtet werden.

5. Verfahren nach Anspruch 4, **dadurch gekennzeichnet, daß** die Kerne durch Tauchen in einen Schlicker beschichtet werden.

6. Verfahren nach Anspruch 5, **dadurch gekennzeichnet, daß** der Schlicker eine wäßrige Aufschlämmung von kohlenstoffhaltigen Materialien oder Siliciumcarbid-Pulver ist, und einen Binder ausgewählt aus Phenolharzen und Polyvinylalkohol enthält.

7. Verfahren nach Anspruch 1, **dadurch gekennzeichnet, daß** als carbonisierbare Materialien Pech, Kunstharze oder thermoplastische Harze eingesetzt werden, die beim Carbonisieren bei Temperaturen von 750 °C bis 1300 °C eine Kohlenstoffausbeute von mindestens 50 % der eingesetzten Masse ergeben.

8. Verfahren nach Anspruch 1, **dadurch gekennzeichnet, daß** die Stromstörer in den Kühlkanälen als luftleitende Profile (31, 32, 41, 42) ausgebildet sind, wobei in der Richtung der Strömung aufeinanderfolgende Profile (31, 32, 41, 42) einen Luftstrom in mindestens zwei Teilströme aufteilen, und jeweils mindestens zwei Teilströme vereinigen, wobei die Ströme so abgelenkt werden, daß strömende Luft aus der Mitte des Kühlkanals (3, 4) an die Wände gelenkt wird, und die Luft von der Wand in die Mitte des Kühlkanals (3, 4) gelenkt wird.

9. Verfahren nach Anspruch 8, **dadurch gekennzeichnet, daß** die Luftleitprofile (41, 42) den gesamten Innenquerschnitt eines Kühlkanals (4) überspannen.

10. Verfahren zur Herstellung von innenbelüfteten Bremsscheiben (1) aus faserverstärkter Keramik mit Kühlkanälen (2,3,4), deren Kühlkanäle Stromstörer in Form von Luftleitiprofilen (31, 32, 41, 42) enthalten, umfassend die Schritte
- Herstellung von Kernen durch ein Spritzgußverfahren, wobei zur Bildung der Luftleitprofile (31, 32, 41, 42) vorgeformte Luftleitprofile aus carbonisiertem harzimprägniertem Kohlenstoffasergewebe in die Spritzgußform für die Kerne eingelegt werden
- Einsetzen der Kerne an die Stelle der zu bildenden Hohlräume in eine Form, Befüllen der Form mit durch Fasern aus Kohlenstoff verstärkten carbonisierbaren Materialien und Bilden eines Vorkörpers für die Bremsscheiben durch Preßformen oder Spritzformen,
- Erhitzen des Vorkörpers unter Ausschluß von oxydierenden Stoffen auf eine Temperatur zwischen 750 °C und 1300 °C unter Carbonisierung und Bildung eines porösen, mit Fasern aus Kohlenstoff verstärkten Kohlenstoff-Körpers,
- Infiltrieren des carbonisierten Körpers mit einer Schmelze von Silicium oder einer Schmelze einer Silicium enthaltenden Mischung und Reaktion des Kohlenstoffs unter Bildung von Siliciumcarbid.

## Claims

1. A process for producing internally ventilated brake disks (1) comprising fiber-reinforced ceramic and having cooling channels (2, 3, 4), whose cooling channels contain baffles selected from among knobs (21, 22, 23, 24, 25), air guide profiles (31, 32, 41, 42) and flow dividers (41, 42) which comprises the steps
- provision of cores having recesses corresponding to the shape of the knobs (21, 22, 23, 24, 25), air guide profiles (31, 32, 41, 42) or flow dividers (41, 42) in the cooling channels,
- insertion of a heat-resistant material into the recesses, which during the course of the further ceramicizing process forms the knobs (21, 22, 23, 24, 25), air guide profiles (31, 32, 41, 42) or flow dividers (41, 42),
- positioning of the cores in a mold at the location of the hollow spaces to be formed, filling of the mold with carbonizable materials reinforced by carbon fibers and formation of a precursor body for the brake disks by pressure molding or
- injection molding,
- heating of the precursor body with exclusion of oxidizing substances to a temperature in the range from 750 °C to 1300 °C with carbonization and formation of a porous carbon body reinforced with carbon fibers,
- infiltration of the carbonized body with a silicon melt or a melt of a silicon-containing mixture and reaction of the carbon to form silicon carbide.

2. The process as claimed in claim 1, wherein the heat-resistant material is selected from among silicon-infiltrated silicon carbide, silicon carbide powder, carbon black, graphite and highly thermally conductive pitch-based carbon fibers.

3. The process as claimed in claim 1, wherein compressible cores are used in the formation of precursor bodies by pressure molding and heat-resistant materials are used in the form of beds which during the pressing procedure are compacted to such an extent that they approximately retain their shape after removal of the cores.

4. The process as claimed in claim 1, wherein the cores are coated with a material comprising a binder and carbon in the form of carbon black or graphite or highly thermally conductive carbon fibers based on pitch or silicon carbide powder.

5. The process as claimed in claim 4, wherein the cores are coated by dipping into a slip.

6. The process as claimed in claim 5, wherein the slip is an aqueous slurry of carbon-containing materials or silicon carbide powder and contains a binder selected from among phenolic resins and polyvinyl alcohol.

7. The process as claimed in claim 1, wherein pitch, synthetic resins or thermoplastic resins which on carbonization at temperatures of from 750 °C to 1300 °C give a carbon yield of at least 50 % of the mass used are used as carbonizable materials.

8. The process as claimed in claim 1, wherein the baffles in the cooling channels are configured as air-guiding profiles (31, 32, 41, 42), with successive profiles (31, 32, 41, 42) in the direction of flow divide an air stream into at least two substreams and in each case combine at least two substreams, with the streams being deflected so that flowing air is directed from the middle of the cooling channel (3, 4) to the walls and the air is directed from the wall into the middle of the cooling channel (3, 4).

9. The process as claimed in claim 8, wherein the air guide profiles (41, 42) span the entire internal cross section of a cooling channel (4).

10. A process for producing internally ventilated brake disks (1) comprising fiber-reinforced ceramic and having cooling channels (2, 3, 4), whose cooling channels contain baffles in the form of air guide profiles (31, 32, 41, 42), which comprises the steps
- production of cores by an injection-molding process, with preformed air guide profiles comprising carbonized resin-impregnated woven carbon fiber fabric being inserted into the injection-molding tool for the cores in order to form the air guide profiles (31, 32, 41, 42),
- positioning of the cores in a mold at the location of the hollow spaces to be formed, filling of the mold with carbonizable materials reinforced by carbon fibers and formation of a precursor body for the brake disks by pressure molding or injection molding,
- heating of the precursor body with exclusion of oxidizing substances to a temperature in the range from 750 °C to 1300 °C with carbonization and formation of a porous carbon body reinforced with carbon fibers,
- infiltration of the carbonized body with a silicon melt or a melt of a silicon-containing mixture and reaction of the carbon to form silicon carbide.

## Revendications

1. Procédé de fabrication de disques de frein (1) à ventilation intérieure en céramique renforcée par des fibres avec canaux de refroidissement (2, 3, 4), dont les canaux de refroidissement contiennent des déflecteurs choisis parmi des boutons (21, 22, 23, 24, 25), des profilés de guidage d'air (31, 32, 41, 42) et des diviseurs de courant (41, 42), comprenant les étapes suivantes :
- préparation de noyaux avec découpes conformément à la forme des boutons (21, 22, 23, 24, 25), profilés de guidage d'air (31, 32, 41, 42) ou diviseurs de courant (41, 42) dans les canaux de refroidissement,
- pose d'un matériau thermorésistant dans les découpes, qui forme les boutons (21, 22, 23, 24, 25), les profilés de guidage d'air (31, 32, 41, 42) ou les diviseurs de courant (41, 42), au cours de la poursuite du processus de céramisation,
- insertion des noyaux à la place des cavités à former dans un moule, remplissage du moule avec des matériaux carbonisables renforcés par des fibres en carbone et formation d'une ébauche pour les disques de frein par formage sous pression ou formage par injection,
- chauffage de l'ébauche, avec exclusion de matière oxydante, à une température entre 700 °C et 1 300 °C avec carbonisation et formation d'un corps de carbone poreux, renforcé par des fibres en carbone,
- infiltration du corps carbonisé avec du silicium fondu ou un mélange fondu contenant du silicium et réaction du carbone avec formation de carbure de silicium.

2. Procédé selon la revendication 1, **caractérisé en ce que** le matériau thermorésistant est choisi parmi le carbure de silicium infiltré de silicium, la poudre de carbure de silicium, la suie, le graphite, et des fibres en carbone à base de poix hautement thermoconductrices.

3. Procédé selon la revendication 1, **caractérisé en ce qu'**on utilise pour la formation d'ébauches par formage sous pression des noyaux compressibles, et **en ce qu'**on a recours à des matériaux thermorésistants sous la forme de matières en vrac qui, lors du processus de mise sous presse, sont compactées de manière à conserver approximativement leur forme après élimination des noyaux.

4. Procédé selon la revendication 1, **caractérisé en ce que** les noyaux sont recouverts d'un matériau contenant un liant et du carbone sous la forme de suie ou de graphite ou de fibres de carbone hautement thermoconductrices à base de poix ou de poudre de carbure de silicium.

5. Procédé selon la revendication 4, **caractérisé en ce que** les noyaux sont recouverts par immersion dans une barbotine.

6. Procédé selon la revendication 5, **caractérisé en ce que** la barbotine est une suspension aqueuse de matériaux contenant du carbone ou de poudre de carbure de silicium, et contient un liant choisi parmi des résines phénoliques et l'alcool de polyvinyle.

7. Procédé selon la revendication 1, **caractérisé en ce qu'**on utilise comme matériau carbonisable de la poix, des résines synthétiques ou des résines thermoplastiques qui, lors de la carbonisation à des températures comprises entre 700 °C et 1 300 °C, ont un rendement en carbone d'au moins 50 % de la masse utilisée.

8. Procédé selon la revendication 1, **caractérisé en ce que** les déflecteurs dans les canaux de refroidissement sont réalisés sous la forme de profilés guidant l'air (31, 32, 41, 42), les profilés (31, 32, 41, 42) se succédant dans la direction du courant divisant un courant d'air en au moins deux courants partiels, et réunissant chaque fois au moins deux courants partiels, les courants étant déviés de manière que l'air s'écoulant soit dévié depuis le milieu du canal de refroidissement (3, 4) sur les parois, et que l'air provenant de la paroi soit dévié au milieu du canal de refroidissement (3, 4).

9. Procédé selon la revendication 8, **caractérisé en ce que** les profilés de guidage d'air (41, 42) occupent toute la section intérieure d'un canal de refroidissement (4).

10. Procédé de fabrication de disques de frein (1) à ventilation intérieure en céramique renforcée par des fibres avec des canaux de refroidissement (2, 3, 4), dont les canaux de refroidissement contiennent des déflecteurs sous la forme de profilés de guidage d'air (31, 32, 41, 42), comprenant les étapes suivantes :
- réalisation de noyaux par un procédé de moulage par injection, des profilés de guidage d'air préformés en tissu de fibres de carbone carbonisé et imprégné de résine étant placés dans le moule d'injection des noyaux, pour former les profilés de guidage d'air (31, 32, 41, 42),
- insertion des noyaux à la place des cavités à former dans un moule, remplissage du moule avec des matériaux carbonisables renforcés par des fibres en carbone et formation d'une ébauche pour les disques de frein par formage sous pression ou formage par injection,
- chauffage de l'ébauche, avec exclusion de matière oxydante, à une température entre 700 °C et 1 300 °C avec carbonisation et formation d'un corps de carbone poreux, renforcé par des fibres en carbone,
- infiltration du corps carbonisé avec du silicium fondu ou un mélange fondu contenant du silicium et réaction du carbone avec formation de carbure de silicium.
